# EUROPÄISCHE PATENTSCHRIFT

(11) **EP 1 234 978 B1**
(45) Veröffentlichungstag und Bekanntmachung des Hinweises auf die Patenterteilung: **16.05.2007**
(21) Anmeldenummer: 02004492.1
(22) Anmeldetag: 27.02.2002
(51) Int. Cl.: F03D 11/04, E02D 27/52, E02B 17/02, F03D 11/00, F03D 1/00

(54) **Off-Shore-Windkraftanlage**
Off-shore wind turbine
Eolienne marine

(30) Priorität: 27.02.2001 DE 10109428
(43) Veröffentlichungstag der Anmeldung: 28.08.2002
(73) Patentinhaber: Briese, Remmer, Dipl.-Ing., 26789 Leer (DE)
(72) Erfinder: Briese, Remmer, Dipl.-Ing., 26789 Leer (DE)
(74) Vertreter: Schmidt, Norbert

(56) Entgegenhaltungen:
- EP-A- 1 174 336
- DE-A1- 10 056 857
- NL-C2- 1 008 318
- US-B1- 6 294 844
- MORGAN C A ET AL: "FEASIBILITY STUDY FOR A UK DEMONSTRATION OFFSHORE WIND TURBINE" WIND ENGINEERING, MULTI-SCIENCE PUBLISHING CO., BRENTWOOD, ESSEX, GB, Bd. 17, Nr. 3, Januar 1993 (1993-01), Seiten 113-119, XP000417857 ISSN: 0309-524X
- PERNPEINTNER R: "OFFSHORE SITING OF LARGE WIND ENERGY CONVERTER SYSTEMS IN THE GERMAN NORTH SEA AND BALTIC REGIONS" MODERN POWER SYSTEMS, WILMINGTON PUBLISHING, WILMINGTON, GB, Bd. 4, Nr. 6, Juni 1984 (1984-06), Seiten 33-40, XP001014353 ISSN: 0260-7840

## Beschreibung

Die Erfindung betrifft eine Off-Shore-Windkraftanlage mit einem auf einem Turm angeordneten Rotor und mit einem Fundament aus einem einzelnen hohlen und nach unten offenen Stahlpfeiler.

Verschiedenartige Off-Shore-Windkraftanlagen sind beispielsweise auf den EP 1 174 336 oder DE 100 56 857 bekannt.

Es ist weiterhin bekannt, Off-Shore-Windkraftanlagen zu installieren, in dem in der Nähe der anvisierten Standorte auf Trockendocks Senkkästen aus armiertem Beton gebaut werden und diese anschließend schwimmend auf ihre endgültige Position ins Meer hinausgezogen werden. Dort werden sie mit Sand und Kies gefüllt, um ihnen das erforderliche Gewicht zu verleihen. Sind sie installiert, so wird der ebenfalls per Lastschiff beförderte Turm mit Windkonverter auf dem Fundament fixiert. Die Windkraftanlage ist nun betriebsbereit. Nachteilig an dieser Methode sind die hohen Kosten für die Fertigstellung des Fundamentes. Diese erhöhen sich darüber hinaus je nach Wassertiefe. Die Kosten sind ungefähr proportional zum Quadrat der Wassertiefe. Bei Wassertiefen zwischen 2,5 und 7,5 m hat jedes Betonfundament ein durchschnittliches Gewicht von rund 1000 t und verursachen so enorme Herstellungs-, Transport- und Installationskosten. Die Kosten für die Installation bei Wassertiefen von mehr als 10 m explodieren.

Es ist bekannt, Schwerkraftfundamente einzusetzen. Anstelle von armiertem Beton wird ein Pfeiler aus zylindrischem Stahlrohr verwandt, der auf einem flachen Stahlkasten ins Seebett gesetzt wird. Auf dem Pfeiler wird der Turm für die Windkraftanlage befestigt. Ein Schwerkraftfundament aus Stahl ist um einiges leichter als ein Betonfundament. Die Stahlkonstruktion wiegt bei Wassertiefen zwischen 4 und 10 m nur 80 bis 100 t. Das relativ geringe Gewicht ermöglicht es, daß für den Transport Lastkähne eingesetzt werden können, die sehr schnell viele Fundamente installieren können.

An Ort und Stelle wird das Fundament mit Olivin gefüllt, das dem Fundament genügend Gewicht verleiht, um die Windkraftanlage zu stabilisieren. Das fertige Fundament wiegt ebenfalls 1000 t. Nachteilig ist, daß eine aufwendige Verfüllung vor Ort, d. h. im Wasser erfolgen muß. Sehr schweres Gerät zur Installation ist nötig. Das notwendige Gewicht, welches die Anlage gegen Kippen schützt, nimmt bei Einsatz in zunehmender Wassertiefe stark zu. Ein Einsatz dieser Anlage für größere Wassertiefen, über 20 m, ist aus ökonomischer Sicht nicht zu vertreten.
Außerdem muß das Seebett um das Fundament herum gegen Erosion geschützt werden, indem Felsbrocken am Rand der Fundamentbasis aufgereiht werden. In Gegenden mit signifikanter Erosion steigen dadurch die Kosten für ein Fundament dieses Typs kräftig an. Die Deinstallation ist wegen des großen Gewichts der Anlage ebenfalls sehr aufwendig.

Ferner ist bekannt, als Fundament für Off-Shore-Anlagen einen einzelnen hohlen Stahlpfeiler zu verwenden. Turm und Pfeiler werden getrennt auf Seeposition transportiert. Zuerst wird der Pfeiler in den Seegrund gerammt. Beim Einrammen drückt sich Seegrund in den Pfeiler und stabilisiert ihn zusätzlich zur Rammtiefe. Der Stahlpfeilerdurchmesser liegt zwischen 3,5 und 4,5 m. Der Pfeiler wird je nach Untergrund auf das 1 bis 1,5-fache der Wassertiefe in das Seebett eingetrieben. Danach wird der Windkonverter mit einem Kranschiff montiert.
Grundsätzlich ist ein Fundament mit einem einzelnen Stahlpfeiler eine einfache Konstruktion und der Transport zur Seeposition ist nicht aufwendig. Für das Eintreiben des Pfeilers ist jedoch schweres Gerät vor Ort notwendig. Die Einrammtiefe des Pfeilers wird begrenzt durch seine Festigkeit am unteren Ende sowie der Leistungsgrenze der verfügbaren Rammgeräte. Der relativ große Pfeilerquerschnitt im Verhältnis zur Seetiefe führt zu großen Angriffsflächen für Wind- und Seegangskräfte. Ein Einsatz dieser Anlage ist daher maximal für eine Wassertiefe bis 20 m geeignet. Außerdem ist diese Art von Fundament nicht geeignet für Seebetten mit vielen Felsbrocken. Ist das Fundament installiert, muß der Turm auf hoher See auf dem Fundament montiert werden. Die Deinstallation ist aufwendiger als die Installation.
Ferner ist es nicht möglich, wirtschaftlichere kleine Rotoren bzw. Turbinen in größeren Wassertiefen zu verwenden.

Aufgabe der Erfindung ist es, eine gattungsgemäße Off-Shore-Windkraftanlage zu schaffen, die einfach und kostengünstig hergestellt, transportiert, installiert und deinstalliert werden kann und bei Wassertiefen bis zu 50 m einsetzbar ist.

Die Aufgabe wird mit dem kennzeichnenden Teil von Anspruch 1 gelöst.

Die Anlage kann am Herstellungsort fertig montiert werden. Sie kann als fertige Anlage auf Seeposition einfach installiert werden. Die Installation ist einfach. Das Fundament bzw. das vorgesehene Fußteil saugt sich mehr oder weniger selbsttätig in den Seegrund ein. Ein Halten, Trimmen und Druckaufbringen ist über die Verspannungen möglich.
Ist die Anlage installiert, so sorgt die Position der Verspannungen direkt unterhalb des Rotors dafür, daß die auf den Pfeiler wirkenden Querkräfte aufgefangen und über die Anker in den Meeresboden geleitet werden. Das Biegemoment wird auf die Strecke bis zu den Verspannungen verkürzt, es geht nicht bis zum unteren Teil des Fundamentes, d. h. bis zum Pfeilerende mit Fußteil. Die geringeren Kräfte, die dadurch auf den unteren Teil des Fußes wirken, bewirken, daß der Verankerungsteil im Boden nicht die ganze Arbeit bzw. Kraft für das Halten und Stabilisieren der Anlage erbringen muß. Durch die Entlastung des Pfeilers kann der Festigkeitsüberschuß dazu verwendet werden, den Durchmesser des Pfeilers zu verringern und damit die Angriffsfläche für Wind- und Seegangskräfte. So kann auch die Größe und Einsenktiefe des Fußes relativ gering im Verhältnis zur Wassertiefe ausgelegt und somit Kosten für Material und Installation eingespart werden. Der kleine Querschnitt des Pfeilers unmittelbar über der Bodenplatte verhindert hohe Strömungsgeschwindigkeiten um den Pfeiler herum und somit Auskolkungen des Meeresgrundes um den Fuß.

Die erfindungsgemäße Entlastung des Pfeilers über die Verspannungen ermöglicht den Einsatz der Anlage auch in Wassertiefen bis zu 50 m.

Darüber hinaus führt der unter der Wasserlinie liegende Teil der Verspannungen aufgrund des hydrodynamischen Widerstandes zu einer Dämpfung der Auf- und Abwärtsbewegung. Die Strömungsverluste werden in das Seewasser dissipiert.

Diese Dämpfung wird auf die gesamte Anlage übertragen und führt zu weichen Ausweichbewegungen der Anlage bei schlagartiger Beanspruchung durch Wellen und Orkanböen. Schwingungen durch den Seegang oder durch den sich bewegenden Rotor werden gedämpft. Die Schlagbeanspruchungs- und Schwingungsdämpfungseigenschaften wirken sowohl gegen Kipp- als auch gegen Torsionsbelastungen.

Es besteht die Möglichkeit, auch in größeren Wassertiefen wirtschaftlichere kleine Turbinen zu verwenden. Denn bei zunehmender Rotorgröße steigen im Verhältnis zur Leistung die Massen- und Herstellungskosten des Rotors so wie anderer Teile des Windkonverters überproportional an, die Massen- und Herstellungskosten der Fundamentierungen dagegen machen mit zunehmender Rotorgröße einen immer geringeren Teil der Gesamtkosten bezogen auf die Leistung des Windkonverters aus. Aus diesem Grund wird es einen Bedarf an Leichtgewicht-Fundamentierungen geben, welche auch in tiefem Wasser (> 20 m) wirtschaftlich mit Windkonvertern mit einem Rotordurchmesser unter 100 m bestückt werden können. Dies ist mit dem Anmeldegegenstand möglich.

Gemäß einer bevorzugten Ausgestaltung der Erfindung sind die Verspannungen in einer horizontalen Ebene in einem Winkelabstand von 120° unterhalb des Rotors bzw. direkt unterhalb der Rotorblätter angeordnet. Die Verspannungen unterhalb der Rotorblätter bzw. unterhalb des Rotorradiusses ermöglichen eine Entlastung des Fußes. Aus diesem Grunde kann der Pfeilerquerschnitt verkleinert und insgesamt eine leichtere Bauweise gewählt werden.

Gemäß einer bevorzugten Ausgestaltung der Erfindung bestehen die Verspannungen in ihrem Mittelteil aus Spanndraht und endseitig aus Ketten, wobei die Länge der Ketten 1 bis 15 % der Gesamtlänge der Verspannungen beträgt. Das Vorsehen von Kettenendstücken erlaubt ein problemloses und verläßliches Spannen der Verspannungen. Die Verspannungen haben ein Eigengewicht, welches dazu führt, daß die Verspannungen nicht vollkommen vorgespannt sind, sondern bei Windstille durchhängen. Kommt es zu einer hohen Wellen- und Windbelastung der Anlage und damit zu einer Schwankbewegung, so wirken die Verspannungen dämpfend auf die Anlage und sie führt weiche Ausweichbewegungen aus, auch bei schlagartiger Beanspruchung durch Wellen und Orkanböen.

Gemäß einer bevorzugten Ausgestaltung der Erfindung ist an der anlagenfernen Kette ein Anker angeordnet. Mittels des Ankers ist die Verspannung im Meeresboden verankert. Da die Verspannungen die Anker fast parallel zur Horizontalen (seitliche Bewegung) beanspruchen, können sie im Vergleich zu Verankerungen, die vertikale Kraftanteile auffangen müssen, leicht und einfach ausgebildet sein.

Gemäß einer bevorzugten Ausgestaltung der Erfindung ist ein Ende jeder Verspannung unterhalb des Rotors in einem Knoten angeordnet, wobei der Knoten zwischen dem Turm und dem Pfeiler abgeordnet ist. So ist sichergestellt, daß die Strecke Rotornabe bis zum Ansatz der Verspannungen so kurz als möglich ist und sich somit ein optimal kurzer Hebel ergibt. Die Quer- bzw. Haltekräfte können so fast vollständig von den Verspannungen erbracht werden. Das Pfeilerfundament ist entlastet. Es muß nur ein kleines Biegemoment aufgefangen bzw. gehalten werden.

Gemäß einer bevorzugten Ausgestaltung der Erfindung sind Turm, Knoten, Pfeiler und Fuß aus einem Stück, vornehmlich aus Stahlrohr oder Stahlgitter. Die Anlage ist fertig montiert und kann als Ganzes transportiert werden. Ein Zusammenbau Konverter/Fundament vor Ort ist nicht nötig. Das Fundament ist schon dran, nämlich das Endstück der Anlage, der Pfeiler mit Fuß.

Gemäß einer bevorzugten Ausgestaltung der Erfindung sind im Knoten Kettenklüsen mit knoteninnenseitig angeordneten Kettenstoppern zum Aufnehmen und Fixieren der Ketten angeordnet, wobei im Knoten ein hydraulischer Kettenspanner angeordnet ist. Diese Maßnahme erlaubt, daß die Verspannungen einfach gespannt und sicher in ihrer Position festgehalten werden können.

Gemäß einer bevorzugten Ausgestaltung der Erfindung ist im Knoten ein Drehwerk und ein Schwenkwerk angeordnet, wobei das Dreh- und Schwenkwerk mit dem hydraulischen Kettenspanner verbunden ist. So ist es möglich, jede Verspannung einzeln anzusprechen und individuell den Grad der Spannung zu bestimmen und nachzustellen, also die Verspannung zu lockern, zu straffen etc. Dies ist möglich sowohl in aufgerichteter Position als auch in horizontaler oder winkliger Lage der Anlage.

Gemäß einer bevorzugten Ausgestaltung ist der Fuß ein in den Seegrund eintreibbarer hohler Zylinder, der kraftschlüssig mit einer runden Bodenplatte verschlossen und nach unten offen ist, wobei die Bodenplatte am oberen Rand abgeschrägt oder abgerundet ist. Die Bodenplatte sorgt für eine Begrenzung der Eintriebtiefe des Fußes in den Grund. Mit der jeweiligen Form der Bodenplatte kann auf die Beschaffenheit des Seegrundes reagiert werden.

Gemäß einer bevorzugten Ausgestaltung der Erfindung ist der Durchmesser des Fußes gleich groß oder größer als der Durchmesser des Pfeilers, wobei der Durchmesser von Fuß zu Pfeiler im Verhältnis 1:1 bis 1:4 liegt. Durch die Verspannungen werden durch Wind und Seegang hervorgerufene Querkräfte über der Wasseroberfläche abgefangen, so daß der Pfeiler nur ein relativ kleines Biegemoment übertragen muß und deshalb einen vergleichsweise kleinen Querschnitt aufweisen kann. Hierdurch kann die Angriffsfläche des Pfeilers für Wind und Seegang signifikant verkleinert werden.

Gemäß einer bevorzugten Ausgestaltung der Erfindung sind im Zylinder zwei Platten senkrecht angeordnet, welche in der vertikalen Zylindermittenachse kreuzartig verbunden sind, wobei die Kreuzplatten mit der Innenfläche des Zylinders und mit der Unterseite der Bodenplatte fest verbunden sind, wobei die Kreuzplatten nach unten pfeilartig aus dem Zylinder herausragen und untere Kanten aufweisen, die vom unteren Ende des Zylinders gegen die Horizontale nach unten abgeschrägt sind. Die scharfen "Eingrabkanten" und die Vierteilung des Hohlraumes des Fußes durch die Kreuzplatten fördern den Festsetzvorgang des Fußes. Die Kreuzplatten sorgen für eine Erhöhung der Stabilität und eine Erhöhung der Steifigkeit des Zylinders. Darüber hinaus wird die im Meeresgrund befindliche Fläche vergrößert.

Gemäß einer bevorzugten Ausgestaltung der Erfindung bestehen die Kreuzplatten aus Blech, wobei das Blech mindestens 20 mm dick ist. So ist sichergestellt, daß die Kreuzplatten dauerhaft halten und ausreichende Stabilität bringen.

Gemäß einer bevorzugten Ausgestaltung der Erfindung ist oberhalb der Bodenplatte im Pfeilerinneren ein Ejektor angeordnet mit einer Saugleitung, welche über ein Sieb mit dem Fußinneren und mit einem Auslaß in der Pfeilerwand mit der Außenseite und mit einer vertikal im Pfeilerinneren geführten Druckleitung, die über einen außen liegenden Flansch mittels Druckschlauch an eine externe Pumpe anschließbar ist, verbunden ist. So ist es möglich, Unterdruckverhältnisse im Fußinneren zu erzeugen, so daß sich der Fuß im Grund festsaugt.

Gemäß einer bevorzugten Ausgestaltung der Erfindung ist im Pfeiler oberhalb des Fußes ein Schott angeordnet und der Raum zwischen Bodenplatte und Schott als Ballasttank mit Ballast befüllbar. Während der Installation der Anlage auf dem Seegrund erhöht das Gewicht des gefüllten Ballasttanks den Druck auf den Fuß und unterstützt damit den Einsaugvorgang bzw. Eingrabvorgang des Fußes in den Grund.

Gemäß einer bevorzugten Ausgestaltung der Erfindung liegt das Schott 2 bis 10 m oberhalb der Wasserlinie. Dies gewährleistet ein optimales Volumen des Ballasttanks und eine ausgezeichnete Statik bei der Installation und Deinstallation der Anlage.

Gemäß einer bevorzugten Ausgestaltung der Erfindung ist der Ballasttank über einen von einen außen zugänglichen Flansch mittels eines Ballastschlauchs und einer externen Pumpe beballastbar und über eine an einer Leitung angeschlossenen Lenzpumpe entballastbar, wobei der eingeleitete Ballast, z. B. Wasser ist. Wasser ist ausreichend schwer als Ballast und im Überfluß vorhanden. Eine externe Pumpe ist bei der Installation sowieso vor Ort. So kann einfach und schnell mit minimalen Mitteln und Aufwand die Festsetzung der Anlage vereinfacht werden.

Gemäß einer bevorzugten Ausgestaltung der Erfindung ist über den Ballastschlauch Druckluft in den Tank einleitbar. Mittels der eingeleiteten Druckluft kann der Lenzvorgang beschleunigt werden.

Gemäß einer bevorzugten Ausgestaltung der Erfindung ist unter der Bodenplatte eine Spülanordnung vorgesehen, wobei die Spülanordnung aus Spülleitungen, welche doppelkreuzförmig entlang der Kreuzplatten und aus einer Spülleitung, welche kreisförmig entlang der inneren Zylinderwand vom Zylinder verlaufen, besteht, wobei an den Spülleitungen Spüldüsen angeordnet sind, wobei die Öffnungen der Spüldüsen der kreisförmigen Spülleitung und die Öffnungen der Spüldüsen der doppelkreuzförmigen Spülleitung nach unten weisen und gegen Zylinderwand und Kreuzplatten gerichtet sind, und zwar unter einem Winkel von 0,5° bis 5° gegen die Vertikale. Die ringförmige Spülleitung verläuft vorzugsweise durch die Kreuzplatten hindurch. Die Ausrichtung des Spülstrahls bewirkt, daß der an den Wandungen haftende Seegrund effizient entfernt wird. Die Spülanordnung ermöglicht ein leichteres Lösen des Fußes aus dem Seegrund bei der Deinstallation der Anlage. Der hydrostatische Auftrieb des Fußes und damit des Pfeilers wird erhöht. Der Seegrund im Fußinneren kann besser gelöst und entfernt werden. Die Anordnung der Spüldüsen gewährleistet, daß die gesamte Innenfläche des Fußes und die Oberfläche der Kreuzplatten von den Spüldüsen erreicht, erfaßt und optimal gereinigt werden können.

Gemäß einer bevorzugten Ausgestaltung der Erfindung sind die Spülleitungen mit einer vertikal im Pfeilerinneren angeordneten Spülleitung verbunden, wobei die Spülleitung über einen Flansch und einen Spülschlauch an eine externe Pumpe zum Zuführen von Druckwasser anschließbar ist. Über die Spüldüsen gelangt Wasser unter Druck in das Innere des Fußes und unterspült den darin befindlichen Seegrund. Wasser ist genug da und kann hier vorteilhaft eingesetzt werden.

Ein Ausführungsbeispiel der Erfindung wird im folgenden näher beschrieben und ist in den Zeichnungen dargestellt, und zwar zeigt:
- Figur 1:: Eine schematisierte Ansicht der ganzen Anlage,
- Figur 2:: Eine schematisierte Draufsicht auf den Pfeiler und den Fuß der Anlage,

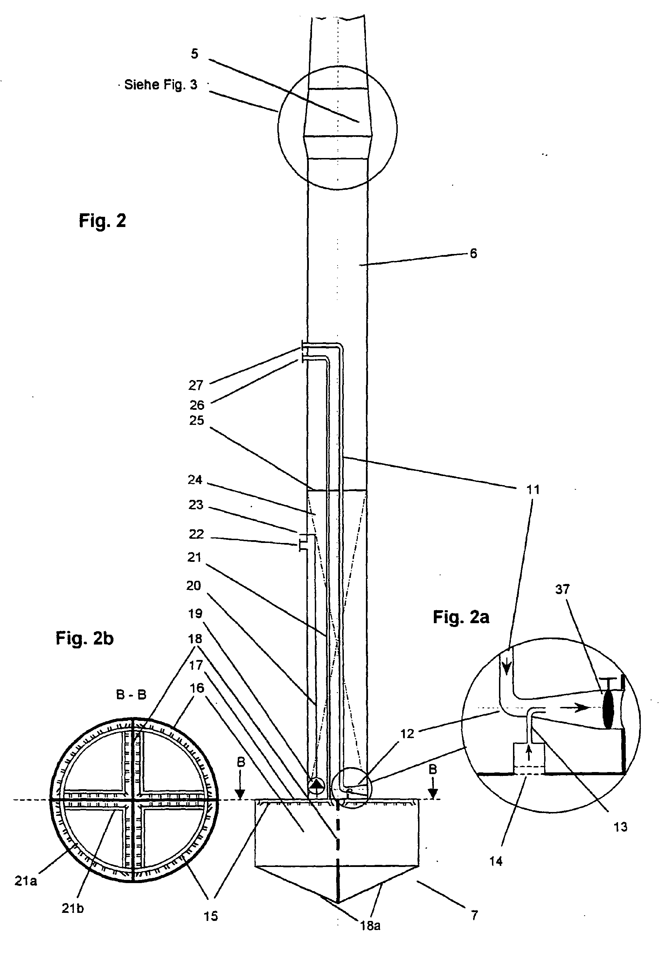

- Figur 2 a:: Eine Vergrößerung eines Ausschnitts aus Figur 2,
- Figur 2 b:: Einen Schnitt gemäß B-B aus Figur 2,

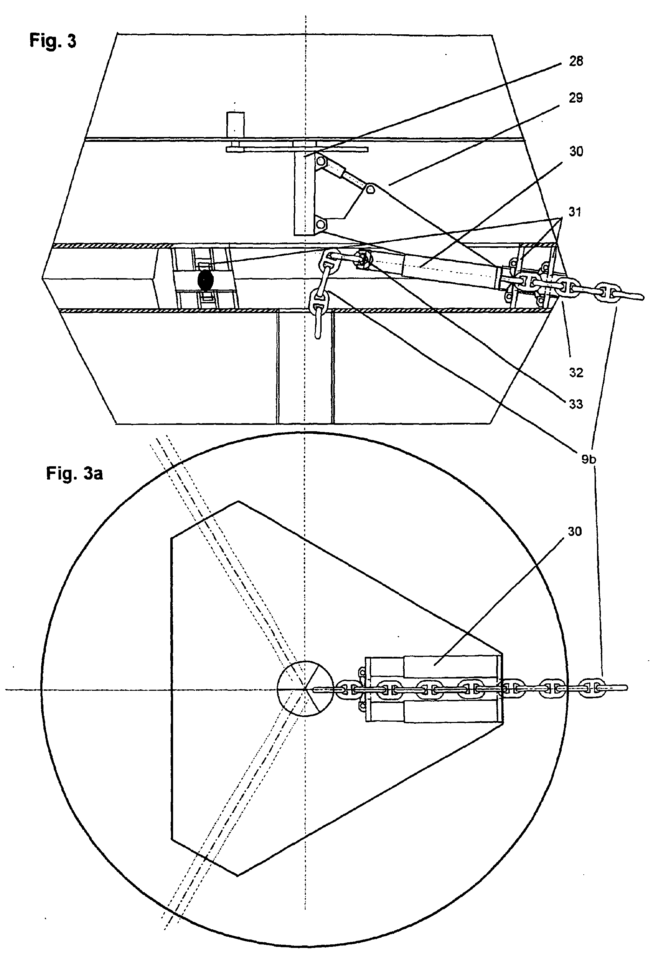

- Figur 3:: Einen Längsschnitt durch den Knoten,
- Figur 3 a:: Querschnitt durch den Knoten gemäß Figur 3,

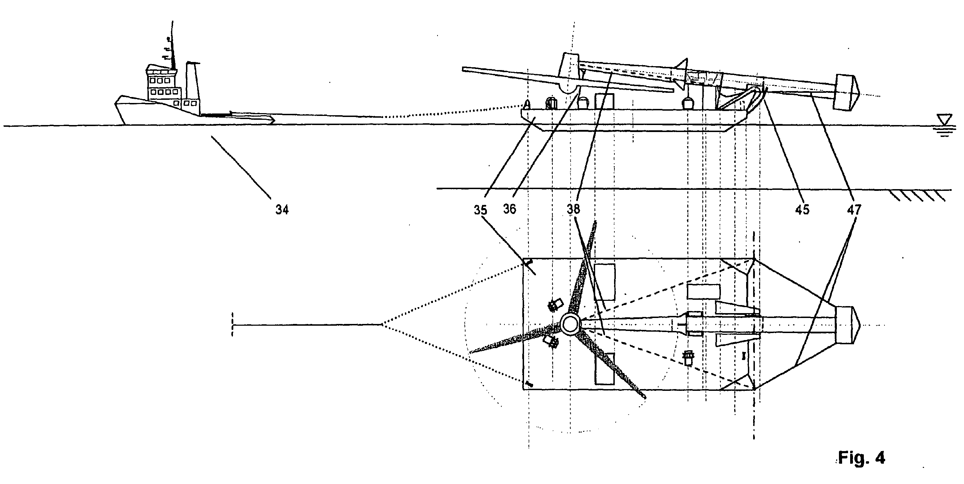

- Figur 4:: Eine schematisierte Ansicht der Anlage während des Transports und einer um 90° gekippten Ansicht,

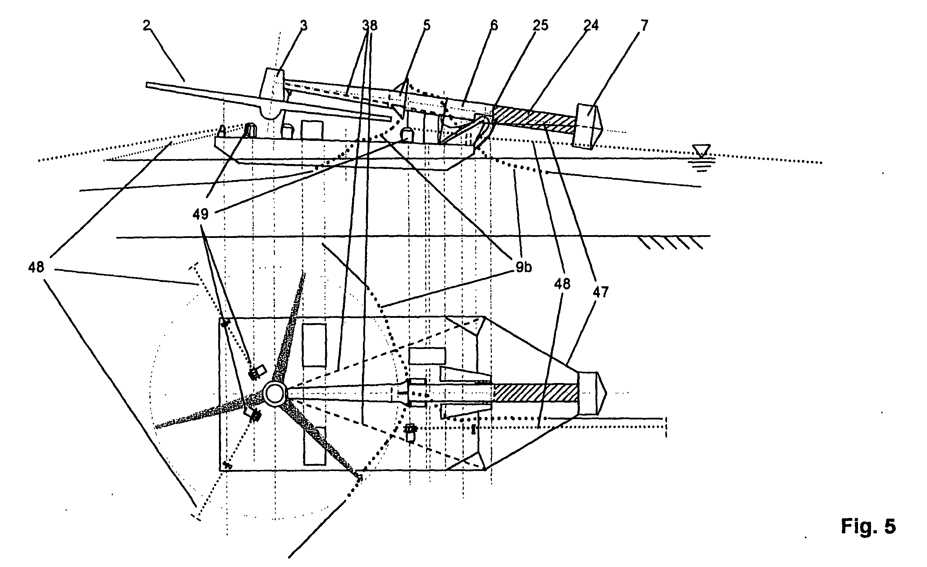

- Figur 5:: Eine schematisierte Ansicht der Anlage während des Abladevorgangs und einer um 90° gekippten Ansicht,

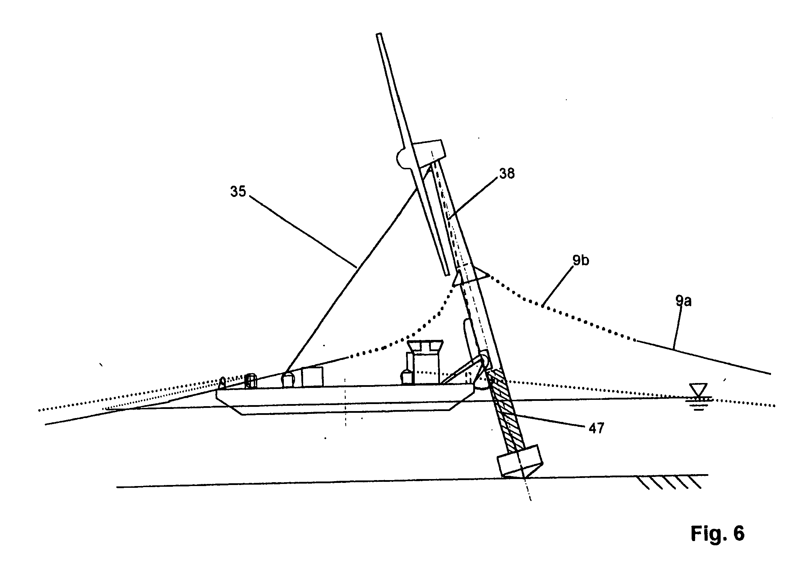

- Figur 6:: Eine schematisierte Ansicht der Anlage während der Installation,

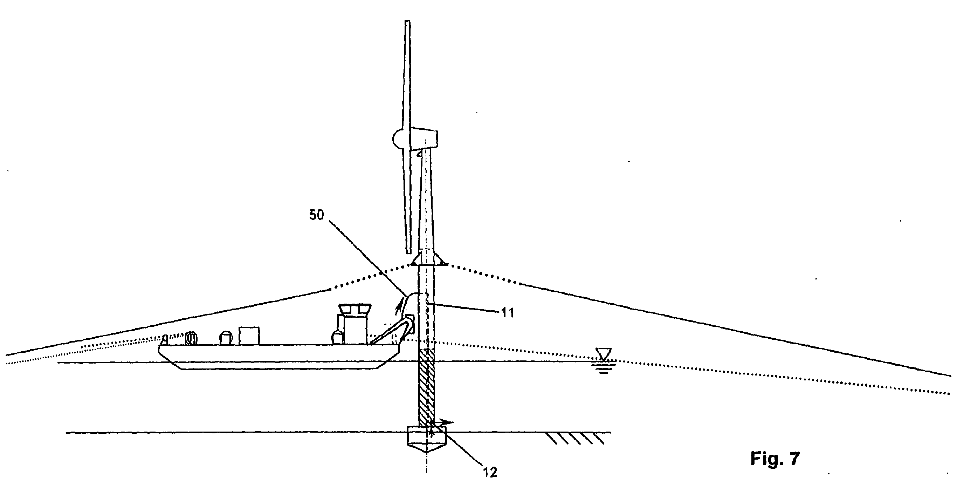

- Figur 7:: Eine schematisierte Ansicht der Anlage während der Fußfestsetzung,

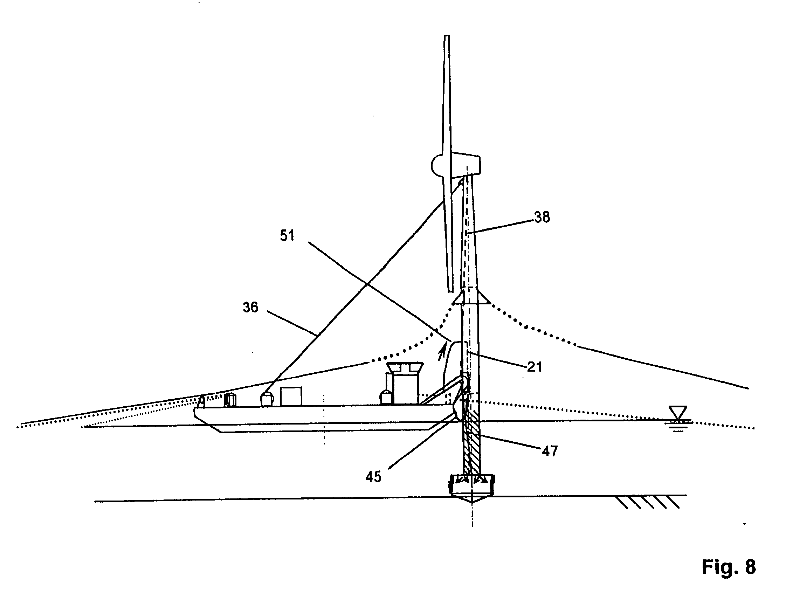

- Figur 8:: Eine schematisierte Ansicht der Anlage während der Deinstallation.

Die erfindungsgemäße Off-Shore-Windkraftanlage 1 ist für Wassertiefen ab 20 m bis zu 50 m geeignet. Besonders geeignet ist ein Terrain mit sandigem Grund.

Die Anlage 1 weist einen Turm 4 auf, an dessen oberem Ende ein um seine horizontale Achse drehbarer Rotor 2 mit Maschinengondel 3 angeordnet ist. Der Turm 4 ist hohl. Nach unten geht er in einen Pfeiler 6 über, an dessen Ende ein Fußteil 7 angeordnet ist.

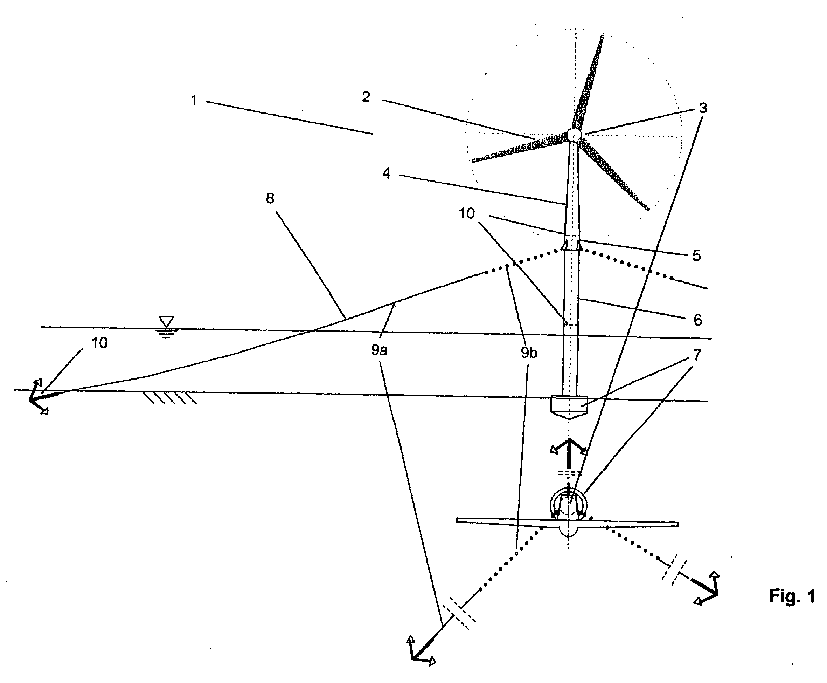

Der Pfeilerdurchmesser beträgt 3,5 bis 4,5 m. Unterhalb des Rotors 2 bzw. unterhalb des unteren Rotorblattes ist ein Knotenteil 5 zwischen Turm 4 und Pfeiler 6 eingeschweißt. Turm 4, Knotenteil 5, Pfeiler 6 und Fuß 7 bestehen aus einem Stück. Das Material ist Stahlrohr. Eine Stahlgitterkonstruktion ist ebenfalls möglich. Im Knotenteil 5 sind radial zur Turmachse 3 Verspannungen 8 im Winkelabstand von 120° befestigt. Die Verspannungen 8 bestehen in ihrem Mittelteil aus Spanndraht 9 a und endseitig aus Ketten 9 b. Die Länge der Ketten 9 b beträgt 1 bis 15 % der Gesamtlänge von Verspannung 8. Ein Kettenende 9 b ist als Vorläufer von Spanndraht 9 a im Knoten angeordnet und an das andere Ende 9 b ist ein Anker 10 angeordnet, z. B. ein Leichtgewicht- oder Patentanker (siehe Figur 1).

Im Knoten 5 befindet sich für jede Kette 9 b eine Klüse 32 und mehrere Kettenstopper 31, ein Drehwerk 28, welches mit einem Schwenkwerk 29 verbunden ist, an welchem wiederum ein hydraulischer Kettenspanner 30 zwangsgeführt befestigt ist, welcher mit Hilfe des Dreh- und Schwenkwerks 28, 29 auf jeder beliebigen Kette positioniert werden kann, und zwar sowohl in aufgerichteter Position der Anlage als auch horizontaler oder winkliger Lage (siehe Figur 3, 3 a).

Der Fuß 7 ist einstückig und endständig am Pfeiler 6 angeordnet. Er kann eine Höhe von 5 bis 20 m aufweisen. Er besteht aus einem hohlen Zylinder 16, welcher an seiner Oberseite mit einer runden Bodenplatte 17 verschlossen ist. Der obere Rand von Bodenplatte 17 kann abgeschrägt oder abgerundet ausgestaltet sein. Das Verhältnis vom Durchmesser der Bodenplatte 17 zum Durchmesser von Pfeiler 6 kann im Verhältnis von 1:3 bis 1:8 variieren. Das untere Ende des Zylinders 16 ist offen. Auf der Bodenplatte 17 ist Pfeiler 6 befestigt (siehe Figur 2). Im Zylinder 16 befinden sich senkrecht angeordnete Kreuzplatten 18, welche in der vertikalen Zylindermittenachse miteinander verbunden sind und radial bis zum Zylindermantel 16 verlaufen (siehe Figur 2 b). Die Kreuzplatten 18 sind an der Innenfläche des Zylinders 16 und an der Bodenplatte 17 angeschweißt. Die Kreuzplatten 18 ragen über das offene Ende des Zylinders 16 hinaus.

Untere Kanten 18 a der Kreuzplatten 18 verlaufen vom unteren Ende des Zylindermantels des Zylinders 16 in einem Winkel gegen die Horizontale nach unten (ca. 20°) und treffen sich in der Zylindermittenachse. Hieraus ergibt sich eine Pfeilung der Kreuzplatten 18 nach unten (siehe Figur 2). Die Kreuzplatten 18 bestehen aus Blech mit einer Minimumdicke von 20 mm.

Unterhalb und parallel zu der Bodenplatte 17 verläuft eine Spülanordnung bestehend aus einer entlang der Zylinderwand von Zylinder 16 kreisförmig verlaufenden Spülleitung 21 a und doppelkreuzförmig angeordneten Spülleitungen 21 b, welche parallel entlang der Kreuzplatten 18 verlaufen.

Die Öffnungen der Spüldüsen weisen nach unten und sind unter einem Winkel von 0,5° bis 5° gegen die Vertikale auf die benachbarten Wände (Zylinderwand/Kreuzplatten 18) gerichtet. Die Spülleitung 21 a verläuft durch die Kreuzplatten 18 durch dafür vorgesehene Durchbrüche (siehe Figur 2 b). Die Spülleitungen 21 a, 21 b sind mit einer vertikal im Pfeilerinneren angeordneten Spülleitung 21 verbunden. Die Spülleitung 21 ist über einen Flansch 26 und einem Spülschlauch 51 an eine externe Pumpe zum Zuführen von Druckwasser, anschließbar.

Oberhalb der Bodenplatte 17 ist im Pfeilerinneren eine Ejektoreinheit 12 angeordnet. Die Ejektoreinheit besteht aus einer Saugleitung 13, welche über ein Sieb 14 mit dem Fußinneren und über einen Auslaß bzw. ein Auslaßventil 37 in der Pfeilerwand mit der Außenseite des Pfeilers 6 verbunden ist (siehe Figur 2 a).

Die Ejektoreinheit ist mit einer senkrecht im Pfeilerinneren verlaufenden Druckleitung 11 verbunden, die über einen außenliegenden Flansch 27 mittels Druckschlauch 15 an eine externe Pumpe anschließbar ist. Es können auch mehrere Ejektoreinheiten in dem Pfeiler angeordnet werden.

Oberhalb der Bodenplatte 17 dient der innen hohle Pfeiler 6 als Ballasttank 24. Hierzu ist er nach oben begrenzt durch ein Schott 25, welches im Pfeiler 6 horizontal eingeschweißt ist. Das Schott 25 liegt ca. zwei bis zehn Meter oberhalb der Wasserfläche. Im Schott 25 ist ein Entlüftungsventil angeordnet.

Im Ballasttank 24 ist eine Lenzpumpe 19 mit angeschlossener Lenzleitung 20 angeordnet. Die Lenzleitung 20 verläuft vertikal im Ballasttankinneren und ist von außen zugänglich über den Lenzflansch 23. Am Ballastflansch 22 ist von außen eine externe Pumpe zum Beballasten von Tank 24 über einen Ballastschlauch 45 anschließbar. Über den Ballastschlauch 45 ist auch Druckluft in den Tank 24 einleitbar. Über den Lenzflansch 23 kann entlüftet und belüftet, aber auch entwässert werden.

An der Backbordseite und der Steuerbordseite der Anlage ist je ein Fußtau 47 an dem Fuß 7 und je ein Kopftau 38 am oberen Turmende angebracht (siehe Figur 4). Eine Kippleine 36 ist ebenfalls am oberen Ende von Anlage 1 angeordnet. Bevorzugtes Material für Kopf- 38 und Fußtau 47, sowie für die Kippleine 36 ist Stahldraht oder Kunstfaser.

Die Verladung und der Transport der Anlage zum Installationsort erfolgt wie folgt:
Die Anlage wird in horizontaler Lage in einem Kran hängend auf ein Wasserfahrzeug bzw. Transportfahrzeug verladen (siehe Figur 4). Die Transportlage ist horizontal. Das Transportfahrzeug ist ein Ponton 35. Der Ponton 35 verfügt über einen eigenen Antrieb oder wird von einem Schleppfahrzeug manövriert (siehe Figur 4). Der Ponton 35 ist mit Positionierwinden 49 ausgestattet, welche jeweils mit einem eigenen Ankergeschirr ausgestattet sind und ein selbständiges Positionieren des Pontons 35 um die Installationsposition der Anlage ermöglichen. Vorzugsweise werden drei Positionierwinden verwendet.

Positionierung von Pontons 35 mit Hilfe von Positionierwinden ist ein bekannter und erprobter Prozess.

Vorzugsweise verfügt der Ponton 35 über ein Generatorhaus, welches sowohl den Ponton 35 wie auch die Anlage 1 während der Arbeiten mit elektrischer und hydraulischer Energie versorgt. Der Antrieb der Generatoren und Hydraulikpumpen erfolgt vorzugsweisen mit Dieselmotoren. Es handelt sich um mobile Kraftstationen. Der Ponton 35 kann auch mit einem Steuerhaus und einem Mannschaftshaus ausgerüstet sein.

Bevor oder während die Anlage auf ihre Installationsposition transportiert wird, werden mit Hilfe geeigneter Hilfsfahrzeuge die Anker 10 der Anlage 1 im Meeresboden auf ihrer vorher berechneten Position verankert. Die Verspannungen 8 der Anlage sind bereits während der Eingrabens der Anker 10 durch das Hilfsfahrzeug an den Ankern 10 befestigt.

An den anlagenseitigen Kettenenden 9 b ist jeweils eine Boje an einer Hilfsleine oder - kette befestigt, mit deren Hilfe die Enden der anlagenseitigen Ketten 9 b an Bord des Pontons 35 genommen und anschließend in den Knoten 5 der Anlage 1 vorgehieft werden können.

Während des Transports der Anlage zum Installationsort liegt der Schwerpunkt der Anlage unter seiner Längsachse. Die Wippachse der Anlage liegt beim Schott 25. Der untere Teil der Anlage (bis zur Wippachse) muß so freiliegen, daß die Anlage bei Beballastung dieses Teiles über ihren Drehpunkt bzw. Drehachse nach unten kippen kann.

Ist der Ponton 35 auf Installationsposition angelangt, so bringt er Positionieranker aus und nimmt dabei die Bojen an Bord, an denen die Enden der anlagenseitigen Ketten 9 b über Hilfsleinen oder -ketten befestigt sind. Nun werden diese in den Knoten 5 der Anlage 1 vorgehieft.

Nachdem der Ponton 35 mit Hilfe seiner Positionierwinden 49 in der Installationsposition fixiert ist, wird der Ballasttank 24 im unteren Teil der Anlage mit Seewasser befüllt (siehe Figur 5).

Hierzu wird eine externe Pumpe an den Ballastschlauch 45 und dieser wiederum an den Flansch 22 angeschlossen. Über Flansch 22 gelangt so Ballast, d. h. Wasser in den Tank 24. Über das Entlüftungsventil im Schott erfolgt der Druckausgleich. Hierdurch wird der Kippvorgang der Anlage eingeleitet.

Der Schwerpunkt der Anlage verlagert sich zum Fuß 7 der Anlage 1 hin und wandert dabei über den Drehpunkt Richtung Außenbords hinaus. Durch Fieren der Kippleine 36 wird die Anlage 1 kontrolliert um die Drehachse (Wippachse) mit ihrem Fuß 7 Richtung Grund gekippt, bis der Fuß 7 auf dem Grund aufliegt (siehe Figur 6).

Nun wird die Anlage durch zwei voreinander unabhängige Mechanismen aufgerichtet, und zwar erstens indem die Kettenvorläufer 8 im Knoten 5 vorgespannt werden.

Die Anlage kann so genau vertikal justiert werden. Der Fuß wird dabei durch das Eigengewicht der Anlage (Ballasttank 24 ist dabei gefüllt) sowie die vertikale Kraftkomponente der Verspannungen in den Grund gedrückt. Zweitens kann die Anlage vom Ponton mit Kraft in alle Richtungen beaufschlagt werden, welcher durch die Positionierwinden 35 manövriert wird. Durch die Gegenkraft des Fußes 7, welcher sich im Grund seitlich abstützt, kann ebenfalls ein Kippmoment in die Anlage eingeleitet werden. Die Installation kann redundant in jeder Phase stabil gehalten oder rückgängig gemacht werden.

Während der gesamten Prozedur kann der Ponton 35 nach üblichen Verfahren mit Hilfe von Pumpen, Leitungen und Ballasttanks getrimmt werden, d. h. um seine Längsund Querachse kippen und tiefer eintauchen. Hierdurch ist es während der Installation nicht nötig, die Länge der Kopf- 38 und Fußtaue 47 unter Kraftaufwand zu verändern.

Nach dem Aufrichten und Positionieren der Anlage wird über den Flansch 27 Druckwasser in die Ejektorleitung 11 gepumpt. Die Druckwasserversorgung erfolgt durch eine externe Pumpe auf dem Ponton 35, welche über Druckschlauch 50 an Flansch 27 angeschlossen wird.

Über die Ejektorsaugleitung 13 wird nun Wasser aus dem Fuß 7 herausgesogen und über das Austrittsventil 37 nach außen abgeführt. Der Fuß 7 saugt sich im Grund fest. Der Fuß 7 steht richtig, wenn die Bodenplatte 17 mit dem Grund abschließt (siehe Figur 7).

Während des Saugvorganges ist die Anlage durch weiteres Spannen der Ketten 9 b genau vertikal auszurichten. Die Ketten 9 b können einzeln angesprochen werden. Eine vertikale Kraftkomponente aus der Vorspannung der Spanndrähte 9 wirkt auf den Pfeiler 6. Eine zusätzliche Vertikalkraft kann über das Ponton 35 erbracht werden.

Es können auch mehrere Pumpen mit mehreren Ejektoreinheiten zum Festsaugen des Fußes eingesetzt werden. Vor oder während des Saugvorganges werden die Fußtaue 47 vom Fuß 7 durch Taucher oder einen vorzugsweise mechanischen Fernauslösemechanismus gelöst.

Nachdem die Anlage auf dem Meeresgrund steht und vorgespannt bzw. fest verspannt ist, werden die oberen Enden der Kopftaue 38 und der Kippleine 36 durch Hilfsleinen vom Turmende herabgelassen und entfernt.

Der Anschluß an ein Seekabel zur Stromversorgung und Leistungsabgabe wird entsprechend der bekannten Konstruktionen und Prozeduren aus der bodenschatzexplorierenden Off-Shore-Industrie durchgeführt.

Mit der Lenzpumpe 19 im Pfeiler 6 wird nun der Ballasttank 24 über Leitung 20 leer gepumpt. Das Wasser entweicht über Flansch 23. Der Ballastschlauch 45 kann zusätzlich Druckluft in den Ballasttank 24 geleitet werden, um den Lenzvorgang zu beschleunigen. Nach dem Entballasten wird der Ballasttank 24 mir trockenem, sauerstofffreiem Gas gefüllt, um Kondensation und Korrosion zu verhindern.

Nach der Installation können die hydraulischen Kettenspanner 30 sowie das Dreh- und Schwenkwerk 28, 29 demontiert und durch eine Montageluke im Knoten 5 mit Kettenzügen oder anderen Hebezeugen auf den Ponton 35 herabgelassen werden zur Wiederverwendung in anderen Anlagen.

Der Windkonverter 1 kann nun in Betrieb genommen werden.
Der Ponton nimmt seine Positionierketten oder -drähte wieder an Bord und wird vom Schleppfahrzeug weg transportiert.

Die Deinstallation der Anlage verläuft in umgekehrter Weise wie die Installation. Der Ponton sollte so beballastet sein, daß sein hinteres Ende, möglichst tief eintaucht. Die Anlage wird dann mit dem Kopf- und Fußtauen 38, 47 sowie der Kippleine 36 befestigt.

Der hydraulische Kettenspanner 30 sowie das Dreh- und Schwenkwerk 28, 29 werden wieder in den Knoten 5 eingebaut. Der Spülschlauch 51 wird am Spülflansch 26 der Spülleitung 21 angeschlossen und Seewasser wird durch die Leitung 21 unter Druck in die Spülleitungen 21 a, 21 b im Inneren des Fußes 7 gepumpt.

Gleichzeitig wird der Ponton entballastet und die Spanndrähte 8, 9 werden entspannt. Durch den hydrostatischen Auftrieb des Pfeilers 6, die vertikale Kraftkomponente der Fußtaue 47 sowie dem Überdruck im Inneren des Fußes 7 wird Fuß 7 kontrolliert aus dem Grund gelöst bzw. gezogen (siehe Figur 8).

Über den am Ballastflansch 22 angeschlossen Ballastschlauch 45 wird der Ballasttank 24 schrittweise mit Seewasser befüllt, und zwar kontrolliert mit zunehmenden Herauslösen des Fußes aus dem Grund.

Mit Hilfe der Spüldüsen 15 werden gleichzeitig im Fuß haftende Reste vom Meeresgrund entfernt.

Falls alle Kraftkomponenten zusammen nicht ausreichen sollten, den Fuß aus dem Grund zu ziehen bzw. zu drücken, kann der Druckschlauch 50 angeschlossen werden und mit dem Ejektor 12 sedimentreiches Spülwasser aus dem Fußinneren entfernt werden, während sedimentfreies Spülwasser im Fuß haftenden Meeresgrund löst. Dieser Vorgang kann nötigenfalls so lange fortgesetzt werden, bis das Fußinnere völlig freigespült ist.

Zum Aufkippen der Anlage auf dem Ponton 35 werden die Spanndrähte 9 weiter gelöst und die Anlage mit Hilfe der Kippleine 36 kontrolliert so weit geschwenkt, daß der Fuß 7 aus dem Wasser ragt und von einem Hilfsfahrzeug von Resten des Meeresbodens befreit werden kann. Das Gewicht der entfernten Reste des Meeresbodens vom Fuß 7 wird durch weiteres Füllen des Ballasttanks 24 kompensiert.

Die Anlage wird weiter gekippt bis sie in ihrer Transportstellung liegt. Die Ketten 9 b werden aus dem Knoten 5 mit jeweils einer Hilfsleine oder -kette auf den Meeresboden herabgelassen. Am Ende der Hilfsleine ist eine Boje befestigt, mit deren Hilfe die Ketten 9 b der Verspannungen 8 und Anker 10 durch ein Hilfsfahrzeug gehoben werden können.

Während der Rückreise wird der Ballast aus dem Ballasttank 24 entfernt, in dem Druckluft über den Ballastschlauch 45 in den Tank geleitet wird und das Wasser durch die Lenzpumpe 19 und die Lenzleitung 20 nach außenbords gedrückt wird.

Die Anker 10 werden von einem Hilfsfahrzeug gehoben und zusammen mit den Verspannungen 8 abtransportiert.

### Stückliste

- 1: Windkonverter
- 2: Rotor
- 3: Maschinengondel
- 4: Turm
- 5: Knoten
- 6: Pfeiler
- 7: Fuß
- 8: Verspannungen
- 9 a: Spanndraht
- 9 b: Ketten
- 10: Anker
- 11: Ejektordruckleitung
- 12: Ejektor
- 13: Ejektorsaugleitung
- 14: Sieb
- 15: Spüldüsen
- 16: Hohler Zylinder
- 17: Bodenplatte
- 18: Kreuzplatten
- 18 a: Kanten der Kreuzplatten
- 19: Lenzpumpe
- 20: Lenzleitung
- 21: Spülleitung
- 21 a: Ringförmige Spülleitung
- 21 b: Doppelkreuzförmige Spülleitung
- 22: Ballastflansch
- 23: Lenzflansch
- 24: Ballasttank
- 25: Schott
- 26: Spülflansch
- 27: Flansch der Ejektordruckleitung
- 28: Drehwerk
- 29: Schwenkwerk
- 30: Hydraulischer Kettenspanner
- 31: Kettenstopper
- 32: Kettenklüse
- 33: Kettenstopper der Spannzylinder
- 34: Schleppfahrzeug
- 35: Ponton
- 36: Kippleine
- 37: Austrittsventil (Auslaß)
- 38: Kopftaue
- 45: Ballastschlauch
- 47: Fußtaue
- 48: Positionierketten
- 49: Positionierwinden
- 50: Druckschlauch
- 51: Spülschlauch

## Patentansprüche

1. Off-Shore-Windkraftanlage mit einem auf einem Turm angeordneten Rotor und mit einem Fundament aus einem einzelnen hohlen und nach unten offenen Stahlpfeiler (6) und Verspannungen zum Verankern der Anlage mit dem Grund, **dadurch gekennzeichnet, dass** unterhalb des Rotors (2) bzw. direkt unterhalb der Rotorblätter mindestens drei Verspannungen (8) angeordnet sind und dass der Stahlpfeiler (6) mit einem Fuß (7) verschlossen ist, der in den Seegrund eingetrieben wird.

2. Off-Shore-Windkraftanlage nach Anspruch 1, **dadurch gekennzeichnet, daß** die Verspannungen (8) in einer horizontalen Ebene in einem Winkelabstand von 120° angeordnet sind.

3. Off-Shore-Windkraftanlage nach Anspruch 1 oder 2, **dadurch gekennzeichnet, daß** die Verspannungen (8) in ihrem Mittelteil aus Spanndraht (9 a) und endseitig aus Ketten (9 b) bestehen.

4. Off-Shore-Windkraftanlage nach Anspruch 3, **dadurch gekennzeichnet, daß** die Länge der Ketten (9 b) 1 bis 15 % der Gesamtlänge der Verspannungen (8) beträgt.

5. Off-Shore-Windkraftanlage nach einem der vorhergehenden Ansprüche, **dadurch gekennzeichnet, daß** an der anlagenfernen Kette (9 b) ein Anker (10) angeordnet ist.

6. Off-Shore-Windkraftanlage nach einem der vorhergehenden Ansprüche, **dadurch gekennzeichnet, daß** ein Ende jeder Verspannung (8) unterhalb des Rotors (2) in einem Knoten (5) angeordnet ist, wobei der Knoten (5) zwischen dem Turm (4) und dem Pfeiler (6) angeordnet ist.

7. Off-Shore-Windkraftanlage nach einem der vorhergehenden Ansprüche, **dadurch gekennzeichnet, daß** Turm (4), Knoten (5), Pfeiler (6) und Fuß (7) aus einem Stück bestehen.

8. Off-Shore-Windkraftanlage nach einem der vorhergehenden Ansprüche, **dadurch gekennzeichnet, daß** im Knoten (5) Kettenklüsen (32) mit knoteninnenseitig angeordneten Kettenstoppern (31) zum Aufnehmen und Fixieren der Ketten (9 b) angeordnet sind, wobei im Knoten (5) ein hydraulischer Kettenspanner (30) angeordnet ist.

9. Off-Shore-Windkraftanlage nach einem der vorhergehenden Ansprüche, **dadurch gekennzeichnet, daß** im Knoten (5) ein Drehwerk (28) und ein Schwenkwerk (29) angeordnet ist, wobei das Dreh- und Schwenkwerk (28, 29) mit dem hydraulischen Kettenspanner (30) verbunden ist.

10. Off-Shore-Windkraftanlage nach einem der vorhergehenden Ansprüche, **dadurch gekennzeichnet, daß** der Fuß (7) ein in den Seegrund eintreibbarer hohler Zylinder (16) ist, der kraftschlüssig mit einer runden Bodenplatte (17) verschlossen und nach unten offen ist, wobei die Bodenplatte (17) am oberen Rand abgeschrägt oder abgerundet ist.

11. Off-Shore-Windkraftanlage nach einem der vorhergehenden Ansprüche, **dadurch gekennzeichnet, daß** der Durchmesser von Fuß (7) gleich groß oder größer ist als der Pfeilerdurchmesser, wobei der Durchmesser von Fuß (7) zu Pfeiler (6) im Verhältnis 1:1 bis 1:4 liegt.

12. Off-Shore-Windkraftanlage nach einem der vorhergehenden Ansprüche, **dadurch gekennzeichnet, daß** im Zylinder (16) zwei Platten (18) senkrecht angeordnet sind, welche in der vertikalen Zylindermittenachse kreuzartig verbunden sind, wobei die Kreuzplatten (18) mit der Innenfläche des Zylinders (16) und mit der Unterseite der Bodenplatte (17) fest verbunden sind, wobei die Kreuzplatten (18) nach unten pfeilartig aus dem Zylinder (16) herausragen und untere Kanten (18 a) aufweisen, die vom unteren Ende des Zylinders (16) gegen die Horizontale nach unten abgeschrägt sind.

13. Off-Shore-Windkraftanlage nach einem der vorhergehenden Ansprüche, **dadurch gekennzeichnet, daß** die Kreuzplatten (18) aus Blech bestehen, wobei das Blech mindestens 20 mm dick ist.

14. Off-Shore-Windkraftanlage nach einem der vorhergehenden Ansprüche, **dadurch gekennzeichnet, daß** oberhalb der Bodenplatte (17) im Pfeilerinneren ein Ejektor (12) angeordnet ist, mit einer Saugleitung (13), welche über ein Sieb (14) mit dem Fußinneren und mit einem Auslaß (37) in der Pfeilerwand mit der Außenseite und mit einer vertikal im Pfeilerinneren geführten Druckleitung (11), die über einen außen liegenden Flansch (27) mittels Druckschlauch (50) an eine externe Pumpe anschließbar ist, verbunden ist.

15. Off-Shore-Windkraftanlage nach einem der vorhergehenden Ansprüche, **dadurch gekennzeichnet, daß** im Pfeiler (6) oberhalb des Fußes (7) ein Schott (25) angeordnet ist und der Raum zwischen Bodenplatte (17) und Schott (25) als Ballasttank (24) mit Ballast befüllbar ist.

16. Off-Shore-Windkraftanlage nach Anspruch 15, **dadurch gekennzeichnet, daß** das Schott (25) zwei bis acht Meter oberhalb der Wasserlinie liegt.

17. Off-Shore-Windkraftanlage nach einem der vorhergehenden Ansprüche, **dadurch gekennzeichnet, daß** der Ballasttank (24) eine Lenzleitung (20) und über einen von außen zugänglichen Flansch (22) mittels eines Ballastschlauches (45) und einer externen Pumpe beballastbar und über eine an einer Leitung (20) angeschlossenen Lenzpumpe (19) entballastbar ist, wobei der eingeleitete Ballast, z. B. Wasser ist.

18. Off-Shore-Windkraftanlage nach Anspruch 17, **dadurch gekennzeichnet, daß** über den Ballastschlauch (45) Druckluft in den Tank (24) einleitbar ist.

19. Off-Shore-Windkraftanlage nach einem der vorhergehenden Ansprüche, **dadurch gekennzeichnet, daß** unter der Bodenplatte (17) eine Spülanordnung vorgesehen ist, wobei die Spülanordnung aus Spülleitungen (21 b), welche doppelkreuzförmig entlang der Kreuzplatten (18) und aus Spülleitung (21 a), welche kreisförmig entlang der inneren Zylinderwand von Zylinder (16) verlaufen, besteht, wobei an den Spülleitungen (21 a, 21 b) Spüldüsen (15) angeordnet sind, wobei die Öffnungen der Spüldüsen von Spülleitung (21 a) und die Öffnungen der Spüldüsen von Spülleitung (21 b) nach unten weisen und gegen Zylinderwand und Kreuzplatten (18) gerichtet sind, wobei die Spüldüsen von Spülleitung (21 a) unter einem Winkel von 0,5° bis 5° gegen die Vertikale auf die Zylinderwand von Zylinder (16) gerichtet sind und die Spüldüsen von Spülleitung (21 b) unter einem Winkel von 0,5° bis 5° gegen die Vertikale auf die Kreuzplatten (18) gerichtet sind, wobei die Spülleitung (21 a) durch die Kreuzplatten (18) hindurch verläuft.

20. Off-Shore-Windkraftanlage nach einem der vorhergehenden Ansprüche, **dadurch gekennzeichnet, daß** die Spülleitungen (21 a, 21 b) mit einer vertikal im Pfeilerinneren angeordneten Spülleitung (21) verbunden sind.

21. Off-Shore-Windkraftanlage nach einem der vorhergehenden Ansprüche, **dadurch gekennzeichnet, daß** die Spülleitung (21) über einen Flansch (26) und einem Spülschlauch (51) an eine externe Pumpe zum Zuführen von Druckwasser, anschließbar ist.

## Claims

1. Offshore wind-power plant with a rotor disposed on a tower, with a base made from a single, hollow steel column (6), which is open at the bottom, and with stays for anchoring the plant to the ground,
**characterised in that**
at least three stays (8) are arranged under the rotor (2) or respectively directly beneath the rotor blades, and that the steel column (6) is closed by a footing (7), which is driven into the sea bed.

2. Offshore wind-power plant according to claim 1,
**characterised in that**
the stays (8) are arranged in a horizontal plane at an angular spacing of 120°.

3. Offshore wind-power plant according to claim 1 or 2,
**characterised in that**
the stays (8) consist of tensioning wire (9a) in their central portion and of chains (9b) at their ends.

4. Offshore wind-power plant according to claim 3,
**characterised in that**
the length of the chains (9b) is 1 to 15% of the overall length of the stays (8).

5. Offshore wind-power plant according to any one of the preceding claims,
**characterised in that**
an anchor (10) is disposed on the chain (9b) remote from the plant.

6. Offshore wind-power plant according to any one of the preceding claims,
**characterised in that**
one end of each stay (8) is arranged beneath the rotor (2) in a node (5), wherein the node (5) is arranged between the tower (4) and the column (6).

7. Offshore wind-power plant according to any one of the preceding claims,
**characterised in that**
the tower (4), node (5), column (6) and footing (7) are made in one-piece.

8. Offshore wind-power plant according to any one of the preceding claims,
**characterised in that**
chain hawses (32) with chain stoppers (31) arranged in the interior of the node are disposed in the node (5) in order to accommodate and fix the chains (9b), wherein a hydraulic chain adjuster (30) is arranged in the node (5).

9. Offshore wind-power plant according to any one of the preceding claims,
**characterised in that**
a rotating mechanism (28) and a slewing mechanism (29) are arranged in the node (5), wherein the rotating and slewing mechanism (28, 29) is connected to the hydraulic chain adjuster (30).

10. Offshore wind-power plant according to any one of the preceding claims,
**characterised in that**
the footing (7) is a hollow cylinder (16) capable of being driven into the seabed, which is locked in a force-fit manner to a round baseplate (17) and is open at the bottom, wherein the baseplate (17) is chamfered or rounded at the upper edge.

11. Offshore wind-power plant according to any one of the preceding claims,
**characterised in that**
the diameter of the footing (7) is of the same size or larger than the diameter of the column, wherein the diameter of the footing (7) relative to the column (6) is within the ratio 1:1 to 1:4.

12. Offshore wind-power plant according to any one of the preceding claims,
**characterised in that**
two plates (18), which are connected in a cruciform manner in the central, vertical axis of the cylinder, are arranged vertically within the cylinder (16), wherein the crossed plates (18) are rigidly connected to the interior surface of the cylinder (16) and to the underside of the baseplate (17), wherein the crossed plates (18) project downwards from the cylinder (16) in the manner of an arrowhead and provide lower edges (18a), which are chamfered from the lower end of the cylinder (16) downwards towards the horizontal.

13. Offshore wind-power plant according to any one of the preceding claims,
**characterised in that**
the crossed plates (18) are made of sheet metal, wherein the metal sheet is at least 20 mm thick.

14. Offshore wind-power plant according to any one of the preceding claims,
**characterised in that**
an ejector (12) is arranged above the baseplate (17) in the interior of the column, with a suction line (13), which is connected via a grating (14) to the interior of the footing and via an outlet (37) in the column wall to the outside, and with a pressure line (11) guided vertically in the interior of the column, which can be connected via a flange (27) disposed on the exterior by means of a pressure hose (50) to an external pump.

15. Offshore wind-power plant according to any one of the preceding claims,
**characterised in that**
a bulkhead (25) is arranged within the column (6) above the footing (7), and the space between the baseplate (17) and the bulkhead (25) can be filled as a ballast tank (24) with ballast.

16. Offshore wind-power plant according to claim 15,
**characterised in that**
the bulkhead (25) is disposed two to eight metres above the waterline.

17. Offshore wind-power plant according to any one of the preceding claims,
**characterised in that**
the ballast tank (24) provides a bilge line (20), and ballast can be added via a flange (22) accessible from the outside by means of a ballast hose (45) and an external pump, and ballast can be removed via a bilge pump (19) connected to a line (20), wherein the ballast introduced is, for example, water.

18. Offshore wind-power plant according to claim 17,
**characterised in that**
compressed air can be introduced into the tank (24) via the ballast hose (45).

19. Offshore wind-power plant according to any one of the preceding claims,
**characterised in that**
a rinsing arrangement is disposed below the base plate (17), wherein the rinsing arrangement consists of rinsing lines (21b), which extend in the form of a double cross along the crossed plates (18), and a rinsing line (21a), which extends in a circular manner around the interior wall of the cylinder (16), wherein rinsing nozzles (15) are fitted to the rinsing lines (21a, 21b), wherein the openings of the rinsing nozzles of the rinsing line (21a) and the openings of the rinsing nozzles of rinsing line (21b) point downwards and are directed against the cylinder wall and crossed plates (18), wherein the rinsing nozzles of rinsing line (21a) are directed at an angle from 0.5° to 5° relative to the vertical towards the cylinder wall of the cylinder (16), and the rinsing nozzles of rinsing line (21b) are directed at an angle of 0.5° to 5° relative to the vertical towards the crossed plates (18), wherein the rinsing line (21a) extends through the crossed plates (18).

20. Offshore wind-power plant according to any one of the preceding claims,
**characterised in that**
the rinsing lines (21a, 21b) are connected to a rinsing line (21) disposed vertically within the interior of the column.

21. Offshore wind-power plant according to any one of the preceding claims,
**characterised in that**
the rinsing line (21) can be connected via a flange (26) and a rinsing hose (51) to an external pump for the supply of pressurised water.

## Revendications

1. Éolienne marine comprenant un rotor disposé sur une tour et une fondation se composant d'un unique pilier (6) en acier, creux et ouvert vers le bas, et de haubanages pour l'ancrage de l'éolienne avec le fond,
**caractérisée**
**en ce qu'**au moins trois haubanages (8) sont disposés au-dessous du rotor (2) ou directement au-dessous des pales du rotor, et
**en ce que** le pilier en acier (6) est obturé par une base (7) qui est enfoncée dans le fond marin.

2. Éolienne marine selon la revendication 1, **caractérisée en ce que** les haubanages (8) sont disposés dans un plan horizontal, à une distance angulaire de 120°.

3. Éolienne marine selon la revendication 1 ou 2, **caractérisée en ce que** les haubanages (8) se composent, dans leur partie centrale, d'un fil tendeur (9a) et, côté extrémité, de chaînes (9b).

4. Éolienne marine selon la revendication 3, **caractérisée en ce que** la longueur des chaînes (9b) est comprise entre 1 % et 15 % de la longueur totale des haubanages (8).

5. Éolienne marine selon l'une quelconque des revendications précédentes, **caractérisée en ce qu'**une ancre (10) est disposée sur la chaîne (9b) éloignée de l'éolienne.

6. Éolienne marine selon l'une quelconque des revendications précédentes, **caractérisée en ce qu'**une extrémité de chaque haubanage (8) est disposée dans un noeud (5), au-dessous du rotor (2), où le noeud (5) est disposé entre la tour (4) et le pilier (6).

7. Éolienne marine selon l'une quelconque des revendications précédentes, **caractérisée en ce que** la tour (4), le noeud (5), le pilier (6) et la base (7) forment une seule et même pièce.

8. Éolienne marine selon l'une quelconque des revendications précédentes, **caractérisée en ce que** des écubiers de chaînes (32) comprenant des butées de chaînes (31) disposées côté intérieur du noeud et servant à loger et à fixer les chaînes (9b) sont disposés dans le noeud (5), où un tendeur de chaîne hydraulique (30) est disposé dans le noeud (5).

9. Éolienne marine selon l'une quelconque des revendications précédentes, **caractérisée en ce qu'**un dispositif rotatif (28) et un dispositif pivotant (29) sont disposés dans le noeud (5), où le dispositif rotatif et le dispositif pivotant (28, 29) sont raccordés au tendeur de chaîne hydraulique (30).

10. Éolienne marine selon l'une quelconque des revendications précédentes, **caractérisée en ce que** la base (7) est un cylindre creux (16) pouvant être enfoncé dans le fond marin, cylindre creux qui est obturé, par action de force, par une plaque de fondation ronde (17), et ouvert vers le bas, où la plaque de fondation (17) est chanfreinée ou arrondie au niveau du bord supérieur.

11. Éolienne marine selon l'une quelconque des revendications précédentes, **caractérisée en ce que** le diamètre de la base (7) est de même grandeur ou plus grand que le diamètre du pilier, où le rapport de diamètre entre la base (7) et le pilier (6) est compris entre 1:1 et 1:4.

12. Éolienne marine selon l'une quelconque des revendications précédentes, **caractérisée en ce que** deux plaques (18) sont disposées verticalement dans le cylindre (16), plaques qui sont assemblées de manière croisée, dans l'axe médian vertical du cylindre, où les plaques croisées (18) sont reliées fixement à la surface intérieure du cylindre (16) et à la partie formant le dessous de la plaque de fondation (17), où les plaques croisées (18) dépassent du cylindre (16), vers le bas, à la façon d'une flèche, et présentent des bords inférieurs (18a) qui, depuis l'extrémité inférieure du cylindre (16), sont chanfreinés vers le bas, par rapport à l'horizontale.

13. Éolienne marine selon l'une quelconque des revendications précédentes, **caractérisée en ce que** les plaques croisées (18) sont en tôle, où la tôle est d'une épaisseur d'au moins 20 mm.

14. Éolienne marine selon l'une quelconque des revendications précédentes, **caractérisée en ce qu'**un éjecteur (12) est disposé à l'intérieur du pilier, au-dessus de la plaque de fondation (17), ledit éjecteur comprenant une conduite d'aspiration (13) qui, par un crible (ou tamis) (14), est raccordée à l'intérieur de la base et au côté extérieur, par une sortie (37) placée dans la paroi du pilier, et comprenant une conduite sous pression (11) guidée verticalement à l'intérieur du pilier, conduite sous pression qui, au moyen d'un tuyau sous pression (50), peut être raccordée à une pompe extérieure, par une bride (27) se trouvant à l'extérieur.

15. Éolienne marine selon l'une quelconque des revendications précédentes, **caractérisée en ce qu'**une cloison étanche (25) est disposée dans le pilier (6), au-dessus de la base (7), et l'espace formé entre la plaque de fondation (17) et la cloison étanche (25), servant de réservoir de ballast (24), peut être rempli de ballast.

16. Éolienne marine selon la revendication 15, **caractérisée en ce que** la cloison étanche (25) se situe entre deux mètres et huit mètres au-dessus de la ligne de flottaison.

17. Éolienne marine selon l'une quelconque des revendications précédentes, **caractérisée en ce que** le réservoir de ballast (24), comprenant une tuyauterie d'assèchement (20), est ballastable, via une bride (22) accessible de l'extérieur, au moyen d'un tuyau de ballast (45) et d'une pompe extérieure, et est déballastable par une pompe d'assèchement (19) raccordée à une tuyauterie (20), où le ballast introduit est par exemple de l'eau.

18. Éolienne marine selon la revendication 17, **caractérisée en ce que** de l'air comprimé peut être introduit dans le réservoir (24), par le tuyau de ballast (45).

19. Éolienne marine selon l'une quelconque des revendications précédentes, **caractérisée en ce qu'**il est prévu, au-dessous de la plaque de fondation (17), un dispositif de lavage, où le dispositif de lavage se compose de tuyauteries de lavage (21b) qui s'étendent, en forme de double croix, le long des plaques croisées (18), et se compose d'une tuyauterie de lavage (21a) qui, de façon circulaire, s'étend le long de la paroi intérieure du cylindre (16), où des buses de lavage (15) sont disposées sur les tuyauteries de lavage (21a, 21b), où les ouvertures des buses de lavage de la tuyauterie de lavage (21a) et les ouvertures des buses de lavage de la tuyauterie de lavage (21b) pointent vers le bas et sont orientées en direction de la paroi du cylindre et des plaques croisées (18), où les buses de lavage de la tuyauterie de lavage (21a) sont orientées suivant un angle compris entre 0,5° et 5° par rapport à la verticale de la paroi du cylindre (16), et les buses de lavage de la tuyauterie de lavage (21b) sont orientées suivant un angle compris entre 0,5 et 5° par rapport à la verticale des plaques croisées (18), où la tuyauterie de lavage (21a) s'étend à travers les plaques croisées (18).

20. Éolienne marine selon l'une quelconque des revendications précédentes, **caractérisée en ce que** les tuyauteries de lavage (21a, 21b) sont raccordées à une tuyauterie de lavage (21) disposée verticalement à l'intérieur du pilier.

21. Éolienne marine selon l'une quelconque des revendications précédentes, **caractérisée en ce que** la tuyauterie de lavage (21) peut, pour l'alimentation en eau sous pression, être raccordée à une pompe extérieure, via une bride (26) et un tuyau de lavage (51).
